(19) Europäisches Patentamt / European Patent Office / Office européen des brevets

(11) **EP 2 209 584 B1**

(12) **FASCICULE DE BREVET EUROPEEN**

(45) Date de publication et mention
de la délivrance du brevet:
**22.02.2017 Bulletin 2017/08**

(21) Numéro de dépôt: **08872267.3**

(22) Date de dépôt: **14.11.2008**

(51) Int Cl.:
*B23K 26/28* $^{(2014.01)}$     *B23K 13/01* $^{(2006.01)}$
*B23K 26/32* $^{(2014.01)}$     *B21C 37/08* $^{(2006.01)}$
*B21C 37/28* $^{(2006.01)}$     *B01D 39/20* $^{(2006.01)}$
*B01D 29/33* $^{(2006.01)}$     *B22F 5/12* $^{(2006.01)}$
*B22F 3/24* $^{(2006.01)}$

(86) Numéro de dépôt international:
**PCT/FR2008/001611**

(87) Numéro de publication internationale:
**WO 2009/098376 (13.08.2009 Gazette 2009/33)**

(54) **FILTRATION FRONTALE PAR ASSEMBLAGE DE TRONÇONS DE TUBES MÉTALLIQUES FRITTES**

FRONTALE FILTRATION DURCH VERBINDEN VON ROHRENABSCHNITEN AUS SINTERMETALL

FRONTAL FILTRATION BY CONNECTION OF SINTERED METAL TUBE SECTIONS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **15.11.2007 FR 0708008**

(43) Date de publication de la demande:
**28.07.2010 Bulletin 2010/30**

(73) Titulaire: **D.R.I. - DEVELOPPEMENT RECHERCHE INNOVATION**
**84170 Monteux (FR)**

(72) Inventeur: **ROUSSET, André**
**F-05110 Claret (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**DE-A1- 10 359 813**     **DE-A1-102005 005 670**
**DE-C1- 3 615 947**     **DE-U1- 8 910 844**
**US-A- 5 368 223**     **US-A1- 2001 044 999**

## Description

L'invention s'applique au domaine de la filtration. Ce terme désigne une technique qui permet de séparer les constituants d'un mélange hétérogène possédant une phase liquide et une phase solide, à travers un milieu poreux.

L'utilisation d'un filtre permet de retenir les particules du mélange qui sont plus grosses que la section maximale des orifices de ce filtre. Le liquide ayant subi cette séparation se nomme filtrat. Les matières que le filtre retient sont nommées résidu ou rétentat, ou encore gâteau.

L'invention est exposée ici relativement à des exemples du secteur de l'épuration d'eau. Mais évidemment, elle peut s'appliquer à divers types de filtration de fluides, par exemple dans l'industrie chimique et/ou pharmaceutique.

Il existe à ce jour, diverses techniques de filtration de fluides.

Ainsi, un dispositif usuel de filtration d'eau appelé « filtre Pasteur », comporte un tube creux en porcelaine dit « chandelle ».

Ce tube est alimenté en eau à filtrer frontalement depuis son extrémité supérieure et dans un sens vertical orienté de haut en bas, sous une pression par exemple de l'ordre de 200 KPa (ou 2 bars, puisqu'un bar vaut 1000 millibars -noté mbar- et approximativement 100.000 Pa).

L'eau à filtrer traverse les porosités de la céramique où les particules polluantes sont retenues. L'eau filtrée (ou filtrat) rejoint un collecteur externe qui entoure le tube.

Le débit de filtration varie entre 5 et 15 litres en 10 heures.

Il existe également des blocs (en anglais : skids) d'ultrafiltration tangentielle, par exemple dans des stations d'épuration d'eau.

Chaque bloc possède un carter en colonne à l'intérieur duquel sont espacés des tubes revêtus d'une membrane dont la porosité correspond à la filtration désirée.

Selon les techniques, les membranes sont elles mêmes en céramique, en matière filtrante organique ou synthétique.

Le fluide à filtrer est maintenu en (re-)circulation dans la colonne sous une pression de gavage. Ainsi, ce fluide pénètre de façon tangentielle à la périphérie de chaque tube jusqu'à l'intérieur ceux-ci, ce qui opère la filtration. Durant cette dernière, le rétentat s'accumule dans la colonne, à l'extérieur des tubes.

Bien que ces colonnes à tubes en céramique permettent un filtrage de qualité, elles présentent des inconvénients.

Tout d'abord, le coût des filtres de ce type est élevé, d'autant que leur rendement est relativement faible. Ceci oblige à une multiplication du nombre de colonnes lorsque le débit de filtration visé est important.

Tandis que la fragilité de la céramique rend leur manipulation délicate. De manière similaire, ces filtres sont sensibles aux dépassements de pressions qui peuvent les altérer.

Pour les tubes organiques, par exemple en cellulose, s'ajoute aux inconvénients économiques et pratiques déjà mentionnés, leur difficulté d'entreposage qui doit s'effectuer à l'abri de l'humidité et à température contrôlée (typiquement 25°C).

Quant aux tubes membranaires à fibres creuses, bien qu'ils soient moins fragiles durant leur transport ou utilisation, ils présentent néanmoins des inconvénients similaires à ceux décrit plus haut.

En outre, pour toutes ces colonnes de filtration, un inconvénient majeur est lié à leur nettoyage qui est particulièrement difficile.

En effet, le rétentat s'accumulant dans les colonnes autour des tubes, une évacuation régulière du rétentat (i.e. des résidus de filtration) est indispensable à un fonctionnement correct de l'installation.

Pour le nettoyage des blocs de filtration connus, il s'est avéré impraticable d'opérer un nettoyage par renversement de la circulation appelé rétro lavage, sauf à des pressions réduites.

Ceci aboutit à des temps de nettoyage excessivement longs (typiquement 2 à 5 heures, avec plusieurs cycles successifs), et donc inacceptables industriellement car ils immobilisent d'autant l'installation ou la station.

Egalement, lorsqu'une recirculation de rétro nettoyage est opérée, elle l'est le plus souvent à des températures élevées, par exemple de l'ordre de 50° à 85°C. Ceci complique l'installation, et oblige à un apport considérable en énergie, avec en général un raccordement au réseau électrique.

De plus, lorsqu'un rétro nettoyage est effectué, il l'est quasi systématiquement par circulation à l'intérieur des colonnes de solutions alternativement basiques ou acides, et/ou contenant des détergents ou analogues.

Ces solutions de nettoyage sont polluantes, et doivent donc être retraitées. Tandis qu'il existe lors de la remise en fonctionnement, un risque de contamination du filtrat par des résidus d'agents chimiques de lavage, en dépit de l'obligation d'opérer des rinçages en fin de nettoyage.

Ces inconvénients étant exposés, citons maintenant des documents relatifs au domaine de la filtration.

Le document FR2558736 décrit un procédé de filtration de liquides à travers un ensemble complexe de parois juxtaposées en cascade et obtenues par frittage de métaux ou alliages métalliques, à perméabilité décroissante, en particulier pour la filtration des vins.

Le document FR2860730 décrit la fabrication d'un élément poreux à partir d'un support par exemple en inox ou alumine. La taille moyenne des pores est typiquement de l'ordre de 10 à 100 nm (soit 0,01 à 0,1 $\mu$m), pour notamment l'obtention de membranes de dénitrification de l'eau.

Le document US6177014 décrit un procédé de séparation de résidus de forage, avec un étage centrifuge ainsi qu'une membrane de séparation connectée en série et pourvue d'une boucle de recirculation. Une membrane est en acier inoxydable fritté, et sa porosité de l'ordre de 1μm.

Enfin, le document WO9964356 décrit une station de traitement pourvue d'un étage final de filtration en forme de tube allongé et constitué d'une membrane.

Citons d'autres documents à rapprocher de l'invention.

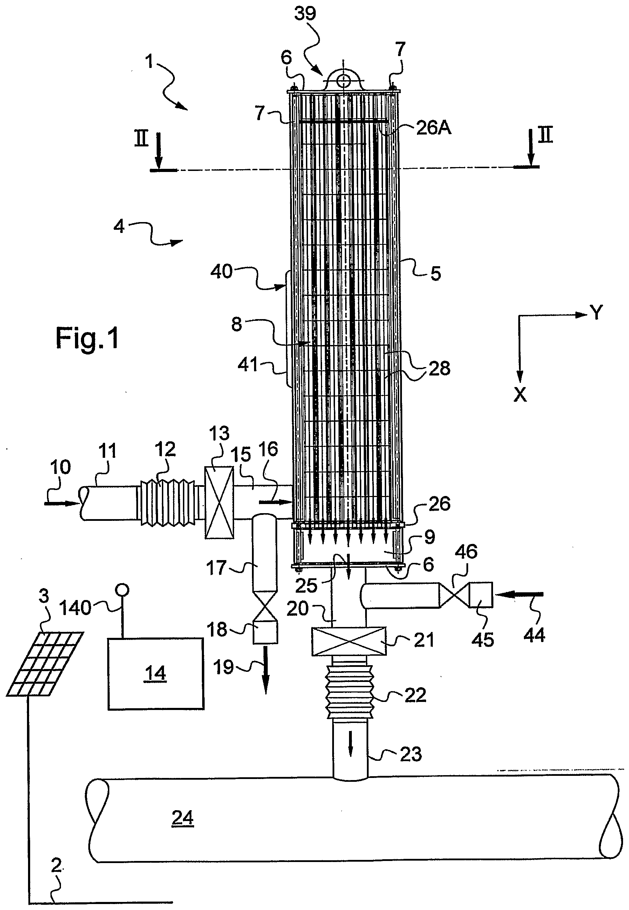

Le document DE 36 15 947 décrit une méthode d'assemblage par soudage à l'aide un anneau de centrage. Pour assembler des tuyaux métalliques épais, non-filtrants et de diamètres internes identiques, un anneau de centrage est interposé entre les extrémités biseautées (pour la tenue mécanique) de ces tuyaux. Le matériau constitutif de l'anneau et des tuyaux est identique. Sur la figure 1, l'anneau comporte une couronne radiale de section rectangulaire (aux seules fins du centrage), et une bande périphérique extérieurement cylindrique et intérieurement toroïdale. Cette bande comporte des épaulements droits, engagés à force dans les extrémités des tuyaux. Ces extrémités des tuyaux sont rendues extérieurement biseautées sur une cote sensiblement égale à la largeur de la collerette et forment avant soudure, une gorge en sillon s'évasant vers l'extérieur.

Le document US 2001 044 999 décrit une méthode de soudage bout à bout de filtres tubulaires cylindriques en matériau céramique poreux. Diverses formes d'embouts de raccordements sont illustrées. Le but est d'obtenir un raccord substantiellement hermétique.

Le document US 5 368 223 décrit une méthode de soudage de tuyaux qui emploie un insert métallique afin d'éviter les amorces de corrosion. Les particules de manganèse (MN) usuellement déposées sur les faces internes de tubes soudés sont évitées par addition d'une couche métallique non corrosive, de sorte qu'il ne survient pas de fumées contenant du manganèse. Une portion de l'insert en forme de couronne (7) possède deux fonctions, à savoir la correction de position des tuyaux et l'apport d'enrichissement pour lutter contre la corrosion. Ces tuyaux sont employés pour faire circuler des gaz à haut degré de pureté, typiquement dans des installations de production d'eau.

Le document DE 10 2005 005 670 décrit le soudage d'organes de filtration en forme d'assiette destinés aux pots d'échappement pour moteurs de véhicules. Des zones planes et superposées de ces organes reçoivent des couches intermédiaires de matière métallique, sous forme de pate. Différentes formes de couches intermédiaires sont illustrées.

Le document DE 103 59 813 décrit l'emploi d'une nappe de gaz inerte lors d'une fusion thermique par laser de rebords périphériques de filtres métalliques.

Le document DE 89 10 844.2 décrit des corps en métal fritté, fixés dans une tubulure pour la filtration.

Avant d'évoquer brièvement les principaux objectifs et avantages de l'invention par rapport aux techniques connues, proposons une définition du terme frittage.

En effet, l'invention propose entre autres de rendre possible industriellement, l'emploi de tubes de filtration en métal fritté, ce qui en pratique ne peut actuellement être implémenté.

Le frittage est une technique de réalisation de pièces rigides de formes diverses, où la consolidation est obtenue par application de chaleur et / ou de pression sur un agglomérat granulaire, en général sans fusion de ses constituants métalliques.

Actuellement, seules des pièces de faibles dimensions peuvent être fabriquées industriellement par frittage de poudres métalliques.

Cette technique de fabrication permet néanmoins des tolérances de dimensionnement élevées (par exemple à h5 ou h7 selon les normes ISO relatives aux ajustements).

Avec le frittage, il est en outre aisé de contrôler la porosité -de même que son homogénéité- visée par exemple pour des pièces de filtration. Tandis qu'l est en général aisé de procéder à des reprises (mécaniques, thermiques ou chimiques) de telles pièces frittées.

De plus, la filtration à travers des pièces de frittage n'implique le respect d'aucune contrainte spécifique de protection de l'environnement, et la durée de vie des tubes ainsi obtenus est particulièrement longue.

Mais à l'heure actuelle, des tubes frittés par exemple à partir d'un acier inoxydable («inox ») de type 316L, ne peuvent guerre atteindre industriellement des dimensions longitudinales (à savoir suivant l'axe longitudinal du tube) dépassant 50mm.

Or, une colonne filtrante typique possède des tubes qui présentent une longueur de 0,8 à 1,5 mètres.

Puisqu'il ne paraît pas possible actuellement de fabriquer directement par frittage des tubes possédant les dimensions désirées, on peut être tenté d'envisager un assemblage bout-à-bout de tronçons tubulaires issus de frittage, afin d'obtenir un tube de filtration frontale aux dimensions souhaitées.

Avant l'invention, les essais effectués sur le terrain dans ce sens se sont avérés infructueux. Par exemple, des tronçons de tube frittés ont été soudés bout-à-bout jusqu'à obtention d'un tube de filtrage de l'ordre de 1000mm.

Mais les zones de soudage altèrent la matière venue de frittage, du fait des contraintes thermiques appliquées lors d'un pareil assemblage.

En conséquence, les propriétés de porosité qui conditionnent la qualité de filtration souhaitée, ne peuvent pas être garanties à l'emplacement des cordons d'assemblage des tronçons de tube frittés.

Ceci rend inexploitable pour la filtration de tels -tubes en assemblage de tronçons venus de frittage.

Étonnement, l'invention propose une technique d'assemblage de tronçons tubulaires venus de frittage, qui garantit aux jonctions d'assemblage entre ces tronçons, à la fois une parfaite étanchéité et une totale homogénéité de la porosité.

Comme on l'a vu, étanchéité et porosité homogènes conditionnent l'obtention d'une filtration de qualité.

On comprend en effet que si les jonctions entre tronçons frittés présentent des fuites ou que la porosité présente des irrégularités ou discontinuités (par exemple sous forme de bulles de dimension supérieure à la filtration visée), des particules polluantes peuvent traverser les filtres, et polluer le filtrat. Ceci n'est pas acceptable.

Par ailleurs, la technique de l'invention permet une économie atteignant 40% par rapport aux tubes conventionnels employés dans les blocs de filtration tangentielle.

Outre les coûts de fabrication de tubes par assemblage de tronçons frittés, la solidité et la pérennité des installations obtenues conformément à l'invention, de même que leur exploitation, s'avèrent particulièrement simples et rentables.

En particulier, grâce à l'invention il est possible de procéder à un nettoyage rapide et efficace des colonnes afin d'en évacuer le rétentat.

En outre, il est possible grâce à l'invention, de réaliser des installations de filtration autonomes (voire transportables sur un véhicule routier, flottant ou aérien), c'est-à-dire de faible encombrement, de poids raisonnable, et présentant des besoins modérés en apport énergétique, tels qu'ils peuvent être satisfaits par des panneaux photovoltaïques, ou encore faisant appel à l'énergie éolienne ou analogues.

A cet effet, l'invention a pour objets un procédé d'assemblage étanche d'au moins deux tronçons tubulaires venus de frittage, selon la revendication 1, un tube de filtration, selon la revendication 5, et une installation de filtration selon la revendication 7. Ces différents objets sont définis par les revendications.

D'autres particularités et avantages de l'invention apparaissent dans la description qui suit d'exemples de réalisation donnés sans caractère limitatif, et se rapportant aux dessins, dans lesquels :

- la figure 1 est une vue schématique en élévation de profil, d'une installation de filtration conforme à l'invention, sur laquelle certaines parties sont représentées en section ;

- la figure 2 est une vue en coupe transversale suivant la ligne II-II, d'un carter en colonne de l'installation de filtration de la figure 1 ;

- la figure 3 est une vue en section d'élévation longitudinale d'un tronçon venu de frittage de tube sans embout d'extrémité, conforme à l'invention ;

- la figure 4 est une vue en section d'élévation longitudinale d'un tronçon venu de frittage de tube à embout d'extrémité, conforme à l'invention ;

- la figure 5 est une vue en élévation longitudinale d'une collerette de raccord (ou organe de jonction) entre deux tronçons de tube frittés;

- la figure 6 est une vue partielle d'un détail en section d'élévation longitudinale de collerette de raccord de la figure 5 ;

- la figure 7 est une vue en coupe d'élévation longitudinale d'un assemblage conforme à l'invention, à l'aide d'une collerette de raccord, deux tronçons de tube frittés, conformes à l'invention ;

- la figure 8 est une vue partielle d'un détail en section d'élévation longitudinale de l'assemblage par collerette de raccord des deux tronçons de tube frittés de la figure 7 ;

- la figure 9 est une vue en coupe transversale similaire à la figure 2, d'une colonne de l'installation de filtration conforme à l'invention, et pourvue d'un agencement de nettoyage à générateurs d'ultrasons, ce qui est possible grâce à l'assemblage mécanique des tronçons frittés qui se veut solide et résistant aux vibrations ;

- la figure 10 est une vue schématique de détail en élévation de profil, d'un mécanisme de fixation de colonne conforme à l'invention, pourvu d'un dispositif dynamométrique intégré à un crochet de fixation ;

- la figure 11 est une vue de détail en élévation, de la colonne de la figure 9 pourvue d'un agencement à ultrasons ;

- la figure 12 est une vue schématique en coupe d'élévation, d'un fût de pré filtration à trémies tête-bêche, destiné à être placé en amont des colonnes à tubes.

Pour plus de simplicité, dans l'ensemble des figures, les structures ou fonctions similaires sont désignées par les mêmes numéros de référence.

Sur les figures sont représentées trois directions X, Y et Z orthogonales les unes aux autres.

La direction X est dite longitudinale. Elle correspond aux longueurs ou dimensions principales des structures décrites. La direction longitudinale X est verticale sur les figures 1, 11 et 12.

Des directions Y et Z sont dites transversales. Elles correspondent aux largeurs et rayons des structures décrites, ou à leurs dimensions latérales. Sur les figures 1 , 11 et 12, les directions transversales Y et Z sont horizontales.

Par simplification, les éléments structurels comparables sont désignés par des références numériques identiques dans la description.

Sur les figures, la référence 1 désigne de façon générale, une installation de filtration conforme à l'invention.

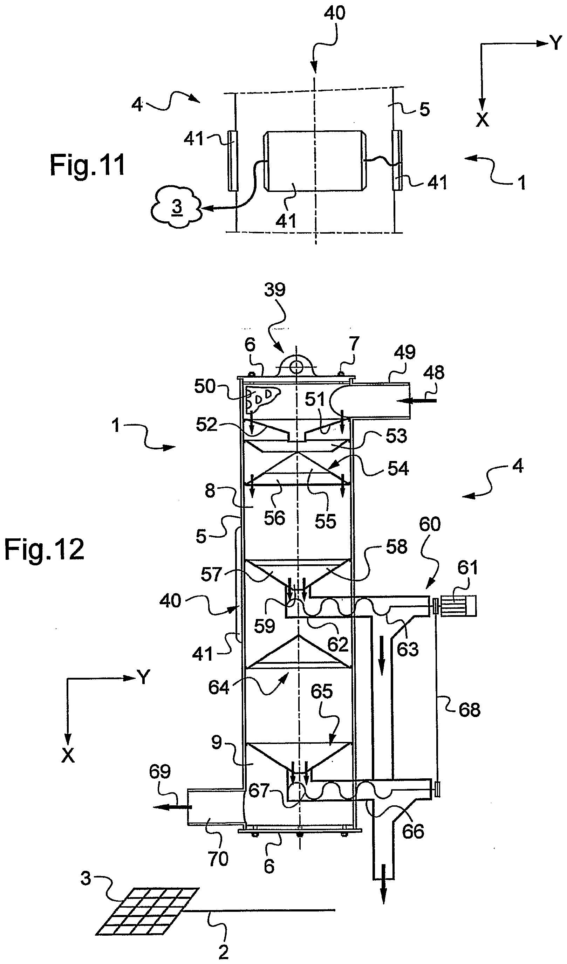

Les figures 1 et 12 montrent schématiquement un châssis 2. Selon les réalisations de l'invention, ce châssis 2 peut prendre diverses formes, notamment :

- un bâtiment à l'intérieur duquel l'installation 1 est agencée au moins en partie, ou un aménagement extérieur - tel qu'une dalle en béton armé- sur lequel l'installation 1 est fixée -éventuellement de manière amovible- ;

- un véhicule terrestre, nautique ou aérien auquel l'installation 1 est solidarisée soit à demeure (par exemple dans le cas d'un camion itinérant d'épuration d'eau pour des missions humanitaires ou militaires), soit de manière amovible (par exemple dans le cas d'un navire de transport d'installations 1 notamment en cas d'urgence suite à un cataclysme naturel) ;

- un châssis 2 mécano-soudé pour un hélitransport de l'installation, par exemple dans le cadre d'une opération militaire.

D'ores et déjà, on comprend que l'installation 1 selon l'invention permet d'obtenir une filtration de qualité avec une structure dont l'encombrement, le poids et les besoins en énergie peuvent être compatibles avec le transport de cette installation 1 , et son fonctionnement de manière autonome.

Il est également possible d'obtenir une installation 1 avec une faible surface au sol. Selon les cas, les colonnes 4 et/ou fûts dégrilleur sont montés en série ou parallèle au sein de l'installation 1.

Ainsi, des réalisations du châssis 2 comportent des capteurs photoélectriques 3 (figure 12) et/ou un système éolien aptes à assurer l'apport en énergie des divers moteurs, pompes et appareillages de commande, nettoyage, automatismes ou contrôle de l'installation 1.

De manière générale d'ailleurs, la référence numérique 3 désigne une source d'énergie électrique sur l'ensemble des figures. Bien sûr, dans des réalisations, cette source 3 est au moins en partie externe (typiquement raccordement à un réseau électrique) ou interne sous forme d'un groupe électrogène ou d'une batterie d'accumulateurs.

En se reportant à la figure 1 en particulier, la structure générale de l'installation 1 est maintenant exposée, en suivant le trajet du fluide à filtrer (dans les réalisations illustrées, de l'eau à épurer).

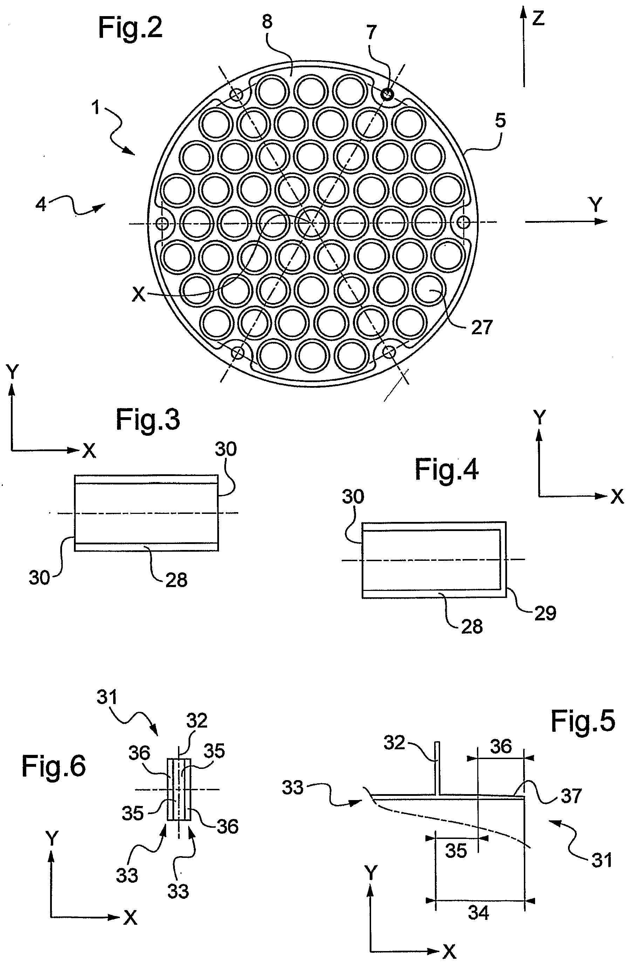

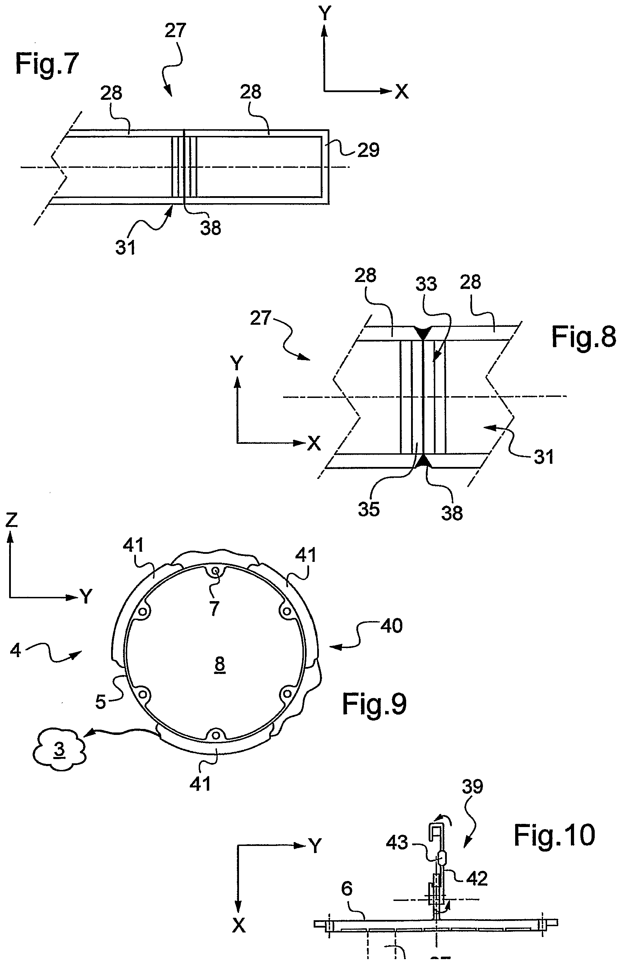

Sur la figure 1, on désigne en 4 une colonne de filtration. Cette colonne 4 comporte un carter 5 généralement étendu suivant la direction longitudinale X, et de forme cylindrique à section circulaire (comme ceci ressort bien de la figure 2 ou 9).

Notons déjà ici que dans des réalisations telles que celle de la figure 12, la référence numérique 4 désigne également un fût dont la structure externe (carte 5 et couvercles 6 notamment) sont comparables.

A chacune de ses extrémités longitudinales, la colonne 4 est équipée d'un couvercle 6, retenu solidaire du carter 5 par une pluralité de tirants 7 à écrous, répartis autour de la circonférence de ce couvercle 6.

A l'intérieur du carter 5, sont définies deux chambres 8 et 9 superposées l'une à l'autre et communiquant ensemble via des éléments de filtration décrit plus loin.

Il ressort bien de la figure 1 que l'alimentation en fluide à filtrer de la colonne 4 (flèche d'entrée 10) est frontale, c'est-à-dire qu'elle s'opère suivant un trajet perpendiculaire à la direction X, dans la réalisation en question suivant une parallèle à la direction transversale Y.

Ce trajet définit un sens de circulation de filtration des fluides, qui est illustré par des flèches (10, 23, etc.) sur les figures.

On notera déjà que dans des étapes de nettoyage notamment, le sens de circulation des matières (fluides ou rétentats en particulier) peut être inverse au sens de circulation de filtration.

Des structures de l'installation 1 déterminent d'amont en aval un circuit de circulation. Ce circuit débute par l'entrée 10 du fluide à filtrer, qui s'effectue dans l'exemple de la figure 1 , via un conduit d'admission 11 d'un diamètre de 80mm.

Ce conduit 11 débouche en aval sur un manchon 12 souple en matière synthétique apte au contact alimentaire, telle que du caoutchouc ou analogues.

Comme on le verra plus loin, ce manchon autorise des mouvements et vibrations des structures de filtration en aval, en particulier de la colonne 4. Ceci sans risquer d'altération de ces structures ou des éléments fixes en amont, dont le conduit 11.

En aval du manchon 12, est agencé une vanne 13 motorisée ou électrovanne, typiquement alimentée par la source d'énergie électrique 3 et pilotée par un poste de contrôle et commande symboliquement représenté en 14 sur la figure 1.

Dans des réalisations, le poste 14 est protégé par un enrobage de résine par exemple, et /ou possède une interface de communication 140 apte à transférer et recevoir (e.g. par réseau numérique câblé ou hertzien) des données relatives à l'état et/ou aux besoins de cette installation 1.

La vanne 13 débouche sur un raccord 15 à deux sorties, dans l'exemple illustré en forme de T.

Une admission principale 16 (formant la branche horizontale du T) est reliée au carter 5 de la colonne 4, de manière à alimenter cette dernière en fluide à filtrer, ce sous la pression de circulation impulsée par la vanne 13.

On comprend que l'admission principale 16 est agencée suivant la direction transversale Y, c'est-à-dire de manière frontale par rapport au carter 5 de la colonne 4 (généralement étendus suivant la direction longitudinale X) auquel il se raccorde, ici par soudage.

Dans la réalisation en question, si la pression d'alimentation de la colonne 4 est de l'ordre de 40 KPa (soit 400 millibars), la filtration théorique de la colonne 4 est de l'ordre de 1,02 m$^3$/s.

Pour une vitesse du fluide d'environ 3 m/s (mh), le débit total de la colonne 4 est sensiblement de 0,01507 m3 par seconde (soit 54,28 m3 par heure). Ici, la porosité à été choisie à 5$\mu$m, pour un passage maximum de l'ordre de 0,1 m3/cm2/heure. Son rendement est supérieur à 90%.

Notons que dans l'exemple de la figure 1, les conduits 11 et 16 notamment, sont en acier inoxydable de type 316L. Pour faciliter les compatibilités d'assemblage, en particulier par soudure, un même matériau est employé autant que faire se peut pour la majorité des structures (carter, tubes, conduits, raccords, etc.) d'une installation 1 donnée.

Une autre sortie 17 du raccord 15 (formant la branche verticale du T), sert à l'évacuation du rétentat lors des nettoyages.

Cette sortie 17 d'évacuation est dotée d'une électrovanne 18, actionnée au besoin par le poste 14, afin d'interdire ou d'autoriser l'écoulement (flèche 19) du rétentat hors de l'installation 1 , par exemple vers un collecteur non représenté.

On comprend que lors d'une retro circulation de nettoyage, le conduit d'admission 16 est partiellement traversé en sens inverse (depuis la colonne 4 vers la vanne 13) afin d'acheminer le rétentat aqueux vers l'écoulement (19).

Les structure, circulations, filtration ou nettoyage à l'intérieur de la colonne 4 sont expliqués plus loin.

A ce stade, nous nous contentons de préciser que pour la filtration, le fluide est admis dans la chambre 8 (dite supérieure ou d'admission) de la colonne 4, puis qu'il est transféré depuis cette chambre 8 vers la chambre 9 (dite inférieure ou de collecte).

En aval de la chambre 9, un conduit 20 de collecte du filtrat est disposé de façon coaxiale par rapport au carter 5. Ce conduit 20 s'étend vers le bas depuis le couvercle inférieur 6 de la colonne 4 auquel il est fixé (ici par soudage ou vissage).

A l'instar du conduit d'admission 1 1 , le conduit de collecte 20 présente ici un diamètre de 80mm, débouche en aval sur une vanne motorisée ou électrovanne 21 (alimentée par la source 3 et pilotée par le poste de contrôle et commande 14). Cette électrovanne 21 est raccordée en sortie à un manchon souple 22, similaire dans ses fonctions au manchon 12.

En aval du manchon 22 est raccordé un conduit 23 de sortie, qui débouche suivant la direction longitudinale X dans un collecteur 24.

Ce collecteur 24 est dans la réalisation de la figure 1 , de forte section (par exemple d'un diamètre de l'ordre de 200mm, voire plus), c'est-à-dire étendu dans le plan formé par les directions X et Z. Ceci favorise la mise en réserve du filtrat issu suivant la flèche 25 de la chambre 9.

D'autant que dans des installations 1 pourvues de plusieurs colonnes de filtration 4, chacune de celles-ci débouchent en sortie dans un tel collecteur 24.

En amont du conduit d'admission 1 1 , l'installation 1 peut comporter des structures aptes à produire des filtrats intermédiaires : c'est ce qu'on désigne par paliers de filtration. Une telle structure est illustrée sur la figure 12, et sera décrite en détail ultérieurement.

En se reportant à la figure 2 principalement, le détail de la colonne 4 ainsi que son fonctionnement sont maintenant décrits.

Dans le carter 5 qui est de forme cylindrique d'axe longitudinal étendu suivant la direction X, est agencé un plancher 26 (figure 1). La forme de ce plancher 26 est similaire à celle des couvercles 6, c'est-à-dire en disque étendu généralement suivant un plan perpendiculaire à la direction longitudinale X.

Ce plancher 26 est disposé à une certaine hauteur longitudinalement entre le conduit de l'admission principale 16, et celui de la sortie d'évacuation 17. Le plancher 26 délimite la partie inférieure ou fonds de la chambre supérieure 8.

Une pluralité de tubes 27 sont agencés entre le couvercle 6 supérieur de la colonne 4 et le plancher 26. Sur la figure 2, 55 tubes 27 sont disposés longitudinalement dans la cavité définie par la paroi cylindrique du carter 5, de manière répartie régulièrement (tubes 27 équidistants de 4,00 mm entre eux) suivant le plan défini par les directions transversales Y et Z.

L'un de ces tubes 27 est centré à l'intérieur de la colonne 4.

La référence 26A sur la figure 1 désigne un disque perforé d'orifices aptes à être chacun traversé par un tube 27. Ce disque 26A est positionné dans le carter 5, ici par appui sur un épaulement périphérique interne de ce carter 5. Il est ainsi aisé de placer le disque 26A dans la colonne 6, puis de disposer chaque tube 27, par guidage dans les orifices de ce disque 26A, à son emplacement fonctionnel.

Dans cette réalisation, le carter 5 présente une épaisseur de paroi de l'ordre de 3mm, et définit un diamètre intérieur de 250mm et un diamètre extérieur de 256mm.

Ceci aboutit à une section entrante par la surface extérieure des 55 tubes 27, de l'ordre de 17.485,87mm2. Avec une hauteur de partie filtrante, mesurée suivant la direction longitudinale X, égale à 1012mm. On obtient ainsi une surface filtrante totale pour la colonne 4 d'approximativement 3,67m2.

Chaque tube 27 présente ici un diamètre extérieur de sensiblement 26mm, et un diamètre intérieur de sensiblement 21 mm, l'épaisseur de paroi de chaque tube 27 étant de l'ordre de 2,5mm. Une section sortante par la surface interne des tubes 27 de la figure 2, est de 19.049,83 mm2. Pour la colonne 4, la filtration théorique est de 1,02m3/seconde, sous une pression de 400 mbar.

Avec une installation 1 possédant 10 colonnes 4 similaires à celle de la figure 2, il est possible d'obtenir une filtration de 542 m3/heure.

Maintenant, référons nous aux figures 3 à 8 pour l'exposé de détail des tubes 27, et notamment leur procédé de fabrication à partir de tronçons 28 en métal venu de frittage.

Chaque tube 27 possède une pluralité de tronçons 28 à orifice traversant (suivant la direction longitudinale X), et à l'une de ses extrémités, un tronçon 28 borgne.

Un exemple de tronçon 28 à orifice traversant est illustré sur la figure 3, tandis qu'une réalisation de tronçon 28 borgne l'est sur la figure 4.

De manière générale, les tronçons 28 possèdent une paroi cylindrique à section circulaire d'axe longitudinal. Dans le cas des tronçons 28 borgnes, une paroi d'embout 29 vient obturer l'une des extrémités de ce tronçon 28. La paroi 29 est sensiblement étendue dans un plan perpendiculaire à la direction longitudinale X, c'est-à-dire dans un plan transversal défini par les directions Y et Z.

Dans la réalisation de la figure 1 , chaque tube 27 comporte 19 tronçons 28 à orifice débouchant de part en part, et à une des extrémités longitudinales de ce tube 27 (ici l'extrémité supérieure), un tronçon 28 borgne (soit un par tube 27 au total).

Sur les figures 3 et 4, les parois périphériques et la paroi d'embout 29 des tronçons 28 mesurent 2,5mm d'épaisseur. Tandis que la cote suivant la direction longitudinale X de chaque tronçon 28 est de 50mm.

Tout comme les conduits 11 ou 20, ainsi que le carter 5, les tronçons 28 de tube sont en acier inoxydable de type compatible avec l'inox 316L.

Comme évoqué, ces tronçons 28 sont fabriqués à partir d'un acier sous forme pulvérulente.

Pour sa mise en forme par frittage, ce métal est mélangé selon les besoins finaux, avec des additifs fonctionnels tels que fer, acier, chrome, nickel bronze, laiton, tungstène, alliages ou résines et analogues.

Ceci constitue une phase / étape préalable du frittage. Une résine ou cire antifriction est ici adjointe à la poudre métallique en préparation de l'opération de frittage.

Puis, ce mélange est compressé dans des moules dont l'empreinte correspond à la forme à obtenir, ici à froid et sous haute pression. Ceci constitue une phase étape ultérieure du frittage.

Vient ensuite une phase ou étape de chauffage e.g. dans un four électrique sous gaz protecteur (tel que de l'hydrogène). La température limite de fusion des matériaux mis en oeuvre n'est pas atteinte, mais cette température de chauffage est suffisante pour induire leur diffusion. Ceci opère la jointure ou soudage de surface des particules pulvérulentes à leurs points de contact mutuels, et qu'on nomme frittage.

La pièce (28) ainsi réalisée acquiert ses propriétés mécaniques définitives. En général, un calibrage par re compression à froid est opéré ensuite, afin d'assurer un strict respect des cotes et tolérances par la pièce.

Ensuite, des reprises à l'aide des techniques courantes qu'elles soient chimiques, thermiques, mécaniques ou analogues, peuvent être opérées, suivant les besoins.

Comme on l'a vu, la technique d'obtention par frittage des tronçons 28 de tube présente de nombreux avantages.

Ainsi, les coûts de fabrication des tubes de filtration d'une colonne 4 sont drastiquement réduits (jusqu'à 40% par rapport à d'autres procédés).

Tandis qu'il est aisé de garantir le respect des cahiers des charges en termes de dimensionnement, porosité états de surface et intervalles de tolérance (IT) qui peuvent correspondre aux calibrages normalisés des seuils de IT7 à IT5.

En outre, une durée de vie exceptionnelle est assurée par le choix de tubes 27 en tronçons 28 venus de frittage et assemblés selon l'invention.

Par ailleurs, il est à noter que la technique du frittage présente un impact limité sur l'environnement, puisque sa mise en oeuvre n'implique pas le rejet de polluants liquides (comme les huiles de coupe dans avec les techniques usuelles d'usinage), ni consommation importante d'énergie. De fait, les réglementations en la matière sont peu contraignantes, ce qui constitue un avantage industriel non négligeable de nos jours.

Mais on a déjà indiqué que le frittage ne permettait pas à ce jour d'obtenir industriellement des pièces de dimensions telles que celles des tubes, que ce soit sous forme de pièce unitaire ou monobloc, ou par assemblage de tronçons.

Maintenant, exposons donc les procédé et matériels spécifiques à l'invention permettant de palier cet inconvénient.

Comme on l'a vu, l'invention vise notamment un procédé d'assemblage étanche d'au moins deux tronçons 28 tubulaires venus de frittage.

Chaque tronçon 28 possède au moins une surface d'assemblage 30 (figures 3 et 4) sensiblement complémentaire à une surface 30 de l'autre tronçon. Pour un tronçon 28 à orifice débouchant, deux surfaces d'assemblage 30 forment les extrémités longitudinales perpendiculaires à la direction X. Pour un tronçon 28 borgne, une seule surface 30 d'assemblage est prévue, en regard et à l'opposé suivant la direction X de la surface d'embout 29. Ces surfaces 30 d'assemblage sont en forme d'anneau.

Sur les figures 5 et 6 on voit un exemple de réalisation d'organe de jonction 31. Chaque assemblage d'une paire de tronçons 28 possède un pareil organe 31.

On n'a pas représenté de réalisation où plusieurs organes 31 sont nécessaires à l'assemblage de tronçons 28, bien que ceci soit possible par exemple en cas de raccordement de plus de deux tronçons, ou lorsqu'il est industriellement plus pratique de prévoit pour un seul assemblage, une jonction formée par plusieurs sous organes (par exemple formant chacun un secteur de la périphérie du tronçon).

L'organe 31 de jonction comporte une âme 32 (ou auréole) qui est bien visible sur la figure 5. Cette âme 32 est agencée au sein d'un assemblage de tronçons 28 (figures 7 et 8) de manière à être interposée entre les surfaces 30 d'assemblage des tronçons 28.

À une étape préalable, l'âme 32 est également maintenue sous contrainte entre ces deux surfaces 30 d'assemblage.

L'invention prévoit selon ce procédé, que l'âme 32 présente une épaisseur transversalement aux surfaces 30 d'assemblage qui est nettement inférieure à celles des tronçons. Dans l'exemple évoqué où les tronçons 28 présentent une épaisseur de paroi de 2,5mm, l'âme 32 des organes 31 est de l'ordre de 0,2mm.

Suivant la direction transversale Y sur les figures 5 et 6, l'âme 32 présente une hauteur entre les surfaces 30 d'assemblage, qui est également inférieure à celle de ces surfaces.

Toujours dans l'exemple évoqué, la hauteur de l'âme 32 est de l'ordre de 2,4mm par rapport à des parois de tronçons 28 ayant des parois de 2,5mm.

Plus généralement, on choisit le rapport entre l'épaisseur de l'âme 32 et celle des tronçons 28 en fonction de la quantité de matière utile à l'assemblage, entre 30 et 70%. Typiquement, une valeur de 60% pour l'épaisseur de l'âme 32 par rapport à celle des tronçons 28 s'avère satisfaisante.

On remarque sur la figure 5 en particulier, que l'organe 31 de jonction présente de part et d'autre de l'âme 32 transversalement, une jupe 33.

Cette jupe 33 est de forme sensiblement complémentaire à un alésage interne du tronçon 28 correspondant et étendue depuis l'âme 32 vers l'extérieur de l'organe 31.

La jupe 33 présente de chaque côté longitudinalement (suivant la direction X) un épaulement 34. Cet épaulement 34 est destiné à pénétrer dans le tronçon 28 correspondant, comme ceci ressort en détails plus bas.

Chaque épaulement 34 possède sur la réalisation des figures 5 et 6, d'abord une section d'ancrage 35 qui est contiguë à l'âme 32.

Puis l'épaulement 34 présente une section d'engagement 36 (sur la figure 5 à biseau 37). Cette section d'engagement 36 est quant à elle contiguë à la section 35 d'ancrage, c'est-à-dire distale à l'âme 32.

De manière générale, la section de l'organe 31 de jonction perpendiculairement à la direction X présente une forme en T renversé, comme ceci ressort bien de la figure 5.

Transversalement à l'âme 32, c'est-à-dire suivant la direction X, chacune des sections d'ancrage 35 et d'engagement 36 est étendue sur une distance sensiblement égale à au moins la moitié de l'épaisseur de paroi du tronçon 28 correspondant. Ici, la section d'engagement 36 mesure sensiblement 2mm y compris le biseau 37.

Pour sa part, la section 35 d'ancrage mesure également 2mm suivant la direction X, c'est-à-dire depuis la base de l'âme 32 jusqu'à la section 36 d'engagement.

En général, ces sections 35 et 36 présentent une épaisseur (perpendiculairement à la direction longitudinale X) au plus égale à celle de l'âme 32. À l'extrémité libre du biseau 37, la section d'engagement 36 mesure 0,1 mm sur la figure 5. Tandis que la section d'ancrage 35 mesure ici sensiblement 0,2mm en épaisseur.

Selon le procédé de l'invention, d'abord les jupes 33 de l'organe 31 de jonction sont insérées dans les alésages des tronçons 28 correspondants.

Pour ce fait, est assuré au moins un glissement juste au droit de chaque section 36 d'engagement. Tandis qu'au droit de chaque section 35 d'ancrage, l'insertion implique un serrage d'étanchéité. On verra plus loin les ajustements normalisés qui sont appliqués à cette fin.

Puis, selon le procédé de l'invention, est effectuée une fusion d'étendue limitée.

Une telle fusion est à distinguer de l'apport massif d'énergie fourni dans le cas d'une soudure avec apport. Ici, l'apport d'énergie est calculé au plus juste, afin d'être apte à ce que soient fondues localement l'âme 32 de l'organe 31 de jonction, ainsi que la proximité directe à cette âme des surfaces 30 d'assemblage de ces tronçons 28.

Ceci réalise une sorte de soudage des tronçons 28, mais sans altération de la structure du matériau de ces tronçons 28 au delà de la jupe 33.

En synthèse, on observe dans les mises en oeuvre illustrées que les épaisseurs et dimensions transversales de l'âme 32, sont déterminées notamment en fonction d'une quantité de métal d'apport voulue pour assurer l'assemblage des tronçons 28.

Cette quantité est ici réduite de 50% à 70% par rapport aux prescriptions d'usage pour le mode de fusion limitée choisi, par exemple laser ou induction.

Ici, l'âme 32 est une pièce venue d'emboutissage ou de décolletage d'un métal ou alliage compatible avec celui des tronçons 28 et également compatible avec le mode de fusion choisi. Les tronçons sont, on l'a vu, en acier inoxydable, par exemple de type 316L.

Exposons maintenant la phase ou étape d'insertion de la section 36 d'ancrage dans une extrémité libre d'un tronçon 28.

Cette insertion est ici opérée par pressage. Dans une réalisation, l'étape d'insertion prévoit une phase d'empilement successif de tronçons 28 en alternance avec des organes 31 de jonction.

Cet empilement est effectué à l'intérieur d'un guide (non illustré) de maintien en position relative, de successivement un tronçon 28 puis un organe 31, et ce jusqu'à un empilement voulu.

Selon les possibilités choisies pour le guide, trois à cinq tronçons sont empilés avant de passer à la phase suivante. Dans l'idéal tous les tronçons 28 et organes 31 nécessaires à la fabrication d'un tube 27.

Ensuite, intervient la phase ultérieure de pressage à proprement parler. Celle-ci est effectuée par un piston opérant l'engagement dans l'alésage des tronçons 28, de la jupe 33 de l'organe 31 d'assemblage correspondant. Tous les tronçons 28 et organe 31 présents dans le guide sont ainsi simultanément assemblés les uns aux autres.

Toujours dans l'exemple évoqué, la phase suivante du procédé procède à la fusion limitée de soudage.

Selon les réalisations, celle-ci est effectuée par soudage laser à tête rotative (qui effectue un trajet annulaire sur 360° autour d'une jonction entre tronçons 28, au droit d'un organe 31).

Notons ici qu'à une telle jonction, on observe une fine gorge périphérique, puisqu'on a vu que l'âme 32 est d'hauteur inférieure à l'épaisseur de paroi des tronçons 28.

Dans une mise en oeuvre alternative, la fusion est obtenue par l'actionnement d'un anneau d'induction, par exemple disposé en sortie du guide d'empilement évoqué.

En observant la figure 8, on remarque que l'apport de matière ainsi que d'énergie à l'emplacement de la jonction entre deux tronçons 28 est tel que le cordon 38 obtenu présente sur sa face externe (contigu aux parois extérieures des tronçons 28), est concave. Tandis qu'entre les tronçons 28, l'âme 32 a quasiment disparu et ne forme plus qu'un trait.

Typiquement, le procédé d'assemblage de tubes 27 selon l'invention est opéré par une machine à transfert, de manière automatisée au moins partiellement.

Il est utile maintenant de préciser les fonctions visées pour les différentes parties des organes 31 de jonction destinés à la mise en oeuvre du procédé de l'invention.

On a vu que cet organe 31 comporte une âme 32 qui présente :

- une épaisseur transversalement aux surfaces d'assemblage 30 de l'ordre d'au plus la moitié, par exemple d'au plus le dixième de celles des tronçons 28 de destination (dans une réalisation cette valeur est de l'ordre du douzième); et/ou

- une hauteur de l'âme 32 entre les surfaces 30 d'assemblage de destination qui est inférieure, par exemple d'un vingt-cinquième, à celle de ces surfaces 30 ; et/ou

- la section 36 d'engagement à biseau 37 présente une épaisseur à son extrémité distale à l'âme 32, qui est de l'ordre de la moitié de celle de l'âme 32.

Comme leurs noms l'indiquent, les sections d'engagement ont pour principale fonction d'assurer une bonne pénétration de l'organe 31 à l'intérieur des tronçons 28 lors de la phase de pressage.

Quant aux sections 35 d'ancrage, leur principale fonction est d'assurer le maintien mécanique des tronçons 28 ensembles. Mais également d'assurer une parfaite étanchéité de l'assemblage de ces tronçons 28. Ceci est particulièrement important dans le cadre d'une installation de filtration. Donc, la phase de fusion limitée a un rôle de sécurité et d'irréversibilité et de continuité de matière.

Evoquons maintenant les structure et fonctions du tube 27 de filtration obtenu selon le procédé de l'invention.

Comme on l'a vu, ce tube 27 comporte une pluralité de tronçons 28 en matière frittée à porosité contrôlée, par exemple de l'ordre de 0,01 à 300 $\mu$m. L'une des extrémités longitudinales du tube 27 est formée par un tronçon 28 borgne, assemblé à des tronçons 28 à orifice débouchant.

Dans l'exemple illustré, chaque tube 27 possède bout-à-bout une vingtaine de tronçons 28 à orifice débouchant et chaque tronçon présente sensiblement une dimension longitudinale de l'ordre de 50mm avec des diamètres externes de l'ordre de 25mm et une épaisseur de paroi de l'ordre de 2 à 3 mm.

Dans ce tube 27, les intervalles de tolérance entre l'intérieur des tronçons 28 et la jupe 33 de l'organe 31 sont sensiblement correspondants aux valeurs normalisées suivantes :

- h7P6 au droit des sections d'ancrage ; et

- h7G6 au droit des sections d'engagement.

Comme évoqué, à la périphérie de l'âme 32 est ménagée une gorge périphérique ou creuse, venue de la fusion d'étendue limitée.

Il convient ici de souligner que grâce à l'invention, on obtient une étanchéité totale entre l'intérieur et l'extérieur des tronçons 28 liés par l'organe 31 (aussi appelé parfois collerette) et formant les tubes 27.

La fusion utilise l'âme 32 (aussi nommée auréole) comme métal d'apport réduit, ce qui confère une excellente résistance mécanique au tube 27.

Un tel tube 27 par exemple en acier Inoxydable 316L (e.g. avec une porosité de l'ordre du micron) est compatible avec le contact alimentaire, est peut fragile et donc aisée à transporter, son coût est particulièrement réduit en comparaison avec les membranes existantes.

Et la filtration réalisée en frontal peut (selon la porosité choisir pour les tronçons 28 d'un même tube 27) couvrir une large gamme de sections de séparations.

En outre, on verra plus loin que ces tubes 27 sont parfaitement compatibles avec un nettoyage rapide recourant à des ultrasons (souvent combinés avec une rétro-circulation de fluide propre et injection d'air).

Selon l'invention, dans une installation 1 de filtration frontale pourvue d'au moins une colonne 4 avec au moins un tube 27 tel qu'évoqué, la filtration s'effectue comme suit.

Le fluide à filtrer est admis à la périphérie des tubes 27 à l'intérieur du carter 5, sous une pression de pénétration. Ce fluide pénètre dans les tubes 27, tandis que les particules polluantes dont la section est supérieure à la porosité des tronçons 28 sont retenues pour former le rétentat. Ce dernier s'accumule au fur et à mesure de la filtration à l'intérieur du carter 5, c'est-à-dire autour des tubes 27 à proximité du plancher 26 notamment.

Pour sa part, le filtrat est collecté dans la cavité longitudinale formée par chaque tube 27, qui débouche vers le bas à travers le plancher 26, jusque dans la chambre inférieure 9.

Ce filtrat est ensuite évacué par le conduit 25, vers le collecteur 24.

Selon les cas, le filtrat est prêt à l'utilisation finale à laquelle on le destine. Soit celui-ci est repris sous pression de pénétration vers une autre colonne 4 dont les tubes typiquement possèdent une porosité inférieure. Ou encore vers un agencement de traitement final, par exemple avec une exposition du filtrat à des rayons UV, traitement physico-chimique (e.g. par adjonction au filtrat de chlore, par exposition à l'ozone ou à du charbon actif notamment).

Suivant une réalisation, l'installation 1 qui possède un châssis 2 ainsi qu'un couvercle 6 supérieur de la colonne 4, prévoit que ce couvercle 6 soit accroché au châssis 2 par une articulation 39 pivotante, par exemple à amortissement.

On a vu que dans les exemples, les admissions principales (15-16) et conduits de collecte 24 sont reliés à un circuit externe à la colonne 4, qui comporte des moteurs et pompes de mise en mouvement du fluide à filtrer, par l'intermédiaire des manchons souples 12 et 22.

Ceci est lié au fait que l'installation 1 comporte ici un équipement 40 de nettoyage par ultrasons, bien visible sur les figures 9 et 11 en particulier.

Cet équipement 40 est disposé contre l'extérieur de la paroi du carter 5. En général, de bons résultats ont été observés lorsque cet équipement 40 est disposé sensiblement à mi-hauteur (suivant la direction longitudinale X) des colonnes 4.

Dans les modes de réalisations illustrés, chaque équipement 40 comporte trois générateurs 41 d'ultrasons raccordés à la source 3 d'alimentation en énergie (ou à une source distincte génératrice d'ultrasons) ainsi qu'au poste de commande 14.

Dans d'autres réalisations, les générateurs 41 sont au nombre de un (anneau périphérique) deux ou plus de trois.

Sur les prototypes de colonnes 4 conformes à l'invention, par combinaison d'ultrasons, d'injection d'air et d'une rétro-circulation de filtrat propre, un nettoyage parfait de l'intérieur du carter 5 (et donc de la périphérie externe des tubes 27 notamment) a été réalisée en 60 secondes (à rapprocher des durées de nettoyage comptées en heures dans les installations connues à ce jour).

Toujours dans cet exemple, le couvercle supérieur 6 est raccordé au châssis 2 par l'intermédiaire d'un crochet 42 de l'articulation 39 pivotante. Ce crochet 42, est pourvu d'un dynamomètre 43 lui-même relié à un poste 14 de commande et contrôle de l'installation 1.

De cette façon, il est possible de détecter l'état de remplissage de la colonne 4.

Une saturation des tubes 27 est aussi détectable à l'aide d'un agencement manométrique, par exemple reflétant une augmentation de la pression frontale de circulation.

Ce sont ces les informations de remplissage de la colonne 4 qui sont détectées par le dynamomètre 43, le poste de commande 14 autorise ou inhibe des opérations de fonctionnement de l'installation 1 telles qu'un nettoyage.

Dans l'exemple illustré, la différence de pression (appelée aussi pression transmembranaire) dans la colonne 4 dépasse une valeur de consigne, le nettoyage est déclenché.

Notons que durant la filtration, il est possible avec l'invention de provoquer dans la chambre supérieure 8 des salves nettoyantes, c'est-à-dire des impulsions brèves (à répétition si nécessaire) d'ultrasons et/ou de jets de fluide propre et/ou de gaz (de l'air en général) sous pression. Ceci peut opérer un désencombrement intermédiaire des tubes 27, entre deux opérations de nettoyage de fonds.

Ce nettoyage met en oeuvre deux types de ressources. D'une part une circulation de fluide (en fait du filtrat collecté depuis le conduit 24) en sens inverse au sens de filtration. D'autre part, une désagrégation du rétentat accumulé dans le bas de la chambre 8 et autour des tubes 27.

Donc, du fluide propre est injecté suivant la flèche 44 depuis un conduit 45 d'alimentation en fluide de nettoyage. Notons qu'à l'instar des conduits du circuit de filtration, une électrovanne 46 est interposée entre le conduit 45 et la canalisation 20 où ce dernier débouche.

Afin de commander les mises en circulation ou coupure du fluide de nettoyage. On prévoit aussi que les éléments de circuit en amont (par rapport à la flèche 44) sont aussi isolés des vibrations par exemple par des manchons similaires aux manchons 12 et 22.

Lorsque le poste 14 commande un nettoyage (que ce soit par commande manuelle ou automatisée e.g. sous l'effet d'une détection de la pression transmembranaire), du fluide de nettoyage est donc injecté dans le conduit 20 puis dans la chambre inférieure 9, sous une pression de pénétration. Il s'agit ici d'une attaque frontale.

Ensuite, ce fluide de nettoyage continue sa retro circulation jusqu'à l'intérieur des tubes 27. Du fait de la porosité de ces derniers, et de ce que ce fluide soit débarrassé de particules plus grosses que la porosité en question, s'opère alors un traversée des parois des tronçons 28 par le fluide.

Ayant traversé les tronçons 28, en sens évidemment inverse à celui de la filtration, les polluants qui se sont accumulés sur la périphérie externe des tubes 27 ainsi qu'à l'intérieur de la chambre 8, sont mobilisées. D'autant qu'une action combinée des générateurs 41 d'ultrasons tend à dissoudre ces polluants après les avoir désagrégés.

Un exemple de générateur 41 produit des ultrasons à une fréquence de l'ordre de 30 KHz à 47 KHz, et est fixé sur l'extérieur du carter 5 par soudage ou analogues.

D'autres gammes de fréquences sont choisies dans des mises en oeuvre de l'invention, notamment en fonction des structures (colonne 4) auxquelles est appliqué le générateur 41, mais également du type de rétentat à nettoyer.

A ce stade, la vanne 13 est obturée par le poste 14, mais la vanne 18 est à l'inverse ouverte, de sorte qu'on récupère suivant la flèche 19, le rétentat en solution dans le fluide de nettoyage.

Maintenant, reportons nous à la figure 12 pour décrire plus en détails le fût désigné de manière générale par la référence numérique 4, du fait de leurs fonctions (filtration) et formes (carter 5 & dimensions) proches.

Le fût 4 fait ici office de module « dégrilleur », c'est-à-dire qu'il assume une étape de séparation (filtrat vs rétentat) ou de filtration, en amont toutefois par rapport au(x) colonne(s) 4 telle(s) qu'illustrée(s) par exemple sur la figure 1 , suivant le sens de circulation du fluide à filtrer.

L'arrivée (flèche 48) d'eau brute se fait par le conduit 49 en haut du cylindre formé par le carter 5 du fût 4.

On comprend au vu de la figure 12, que cette arrivée est placée tangentiellement par rapport à ce cylindre. Le fût 4 dégrilleur de l'invention peut recevoir des corps polluants dont les 3 cotes, dans l'espace, sont les suivantes (respectivement suivant l'une des directions X, Y et Z) :

$$A < B < C.$$

Du fait que le conduit d'arrivée 49 est placé tangentiellement, on obtient une circulation de fluide à effet cyclonique à l'intérieur de la partie de sommet de la chambre supérieure 8 (c'est-à-dire sous le couvercle supérieur 6).

En outre, une couronne 50 interne perforée par crevaison inverse, est ménagée à une faible distance (quelques mm) de la face interne du carter 5 au niveau de la partie haute de la chambre 8.

Cette couronne 50 opère du fait de ses saillies orientées vers l'intérieur, des frottements sur les corps polluants contenus dans le fluide à l'arrivée. Ceci ralentit la vitesse de ces corps qui circulent en périphérie du carter 5.

De ce fait, d'un côté une partie du fluide arrivant du conduit 49 est recueilli entre la couronne 50 et le haut du carter 5, d'où il s'écoule sous l'effet de la gravité vers le bas du fût 4.

De l'autre côté, les corps polluant freinés et retenus à l'intérieur de la couronne 50 sont dirigés sous l'effet de leur élan combiné avec celui du flux, vers un premier déflecteur 51. Ce déflecteur 51 est interchangeable en fonction du fluide à filtrer.

Ici, le déflecteur 51 présente la forme d'un entonnoir dont la périphérie externe vient au droit de la couronne 50, et la trémie 52 de sortie débouche en regard d'une chicane 53 de centrage des corps polluants issus de l'intérieur de la couronne 50.

Ces corps descendent et sont guidés par le premier déflecteur 51 (en acier Inoxydable e.g. de type 316L) qui n'est pas perforé, vers un premier tamis 54 en « V » inversé dont la zone centrale 55 présente des perforations de section égale à C/10.

A son pied c'est-à-dire à sa périphérie inférieure et externe, le tamis 54 comporte une couronne circulaire 56 de passage supérieur à C, qui laisse passer les corps polluants contenus dans l'effluent.

Un deuxième tamis 57 en forme d'entonnoir est agencé à l'intérieur du fût 4 en aval (i.e. suivant la circulation gravitationnelle de haut en bas, le long de la direction longitudinale X).

Ce deuxième tamis 57 présente à sa partie inférieure et centrée sur l'axe du fût de direction X, une grille 58 à perforations de section égale à C/20.

Tandis que le fonds de ce tamis 57 est débouche à travers une ouverture 59 (dont la section de passage est nettement supérieure à C).

A ce stade, les corps polluants récupérés via l'ouverture 59, sont extraits hors du fût 4 (on parle ici de première extraction de rétentat), par un dispositif d'évacuation 60.

Ici, ce dispositif d'évacuation 60 comporte un canal d'évacuation 62 (agencé sensiblement parallèlement au conduit d'arrivée 49), avec une extrémité raccordée à l'ouverture 59 et une l'extrémité libre borgne.

A cette extrémité libre, un motoréducteur 61 (unique) est agencé de façon à actionner en rotation, un racleur 63 en ressort ou spirale ou en hélice.

Le pas du racleur 63 tire vers une conduite verticale 64 excentrée hors du fût 4, tous les corps de section inférieure ou égale à C, récupérés en amont.

On parle de 1er étage du fût 4 dégrilleur, pour désigner les organes de séparation disposés entre la couronne 50 et l'ouverture 59.

Tandis qu'on parle de 2eme étage pour désigner les organes de séparation disposés toujours dans la chambre supérieure 8 mais en aval deuxième tamis 57 (c'est-à-dire vers le bas).

Ce deuxième étage fonctionne de façon similaire au premier, et l'effluent est débarrassé des corps polluants de sections inférieures ou égales à C, qui tombent dans un troisième tamis 64 dont la section de passage est égale à C/30.

Le bas de ce tamis 64 est similaire au premier tamis 54 et laisse donc passer à son niveau inférieur, les corps qui auraient pu échapper aux deux tamis supérieurs (54 et 57).

Cependant, on a constaté sur les prototypes que la présence de ce troisième tamis 64 est quasiment facultative, puisqu'aucuns des corps de telle section n'atteint cette partie du fût 4, ceux-ci étant systématiquement séparés en amont. Toutefois, pour des raisons de sécurité, il peut être préférable de maintenir un tel tamis 64.

Les effluents de calibrage supérieur ou égal à C/30 tombent dans un quatrième et dernier tamis 65, dont la maille est de section égale à C/40.

Similairement à ce qui est opéré au niveau du dispositif 60, une deuxième extraction est effectuée en aval de ce tamis 65, avec un second canal d'évacuation 66 et un second racleur 67 en ressort ou spirale en spirale.

Le pas du racleur 63 tire vers la conduite verticale 64 tous les corps récupérés en amont.

Notons que le racleur 67 n'est pas ici entraîné par un moteur propre, mais que c'est le motoréducteur unique 61 qui l'entraîne en rotation, par l'intermédiaire d'un jeu de pignons et chaîne 68.

Par ailleurs, la vitesse du motoréducteur 61 est pilotée soit manuellement soit de manière programmée par le poste 14, notamment en fonction du débit de rétentat ou fluide.

Comme évoqué, ici également la séparation s'avère en pratique dictée uniquement par des raisons de sécurité, puisque les corps polluants ont été séparés du filtrat en amont.

Si on admet que des corps de dimensions A=10mm x B=15mm x C=20mm, la sortie du fût 4 dégrilleur libère un effluent dont les polluants seront de section inférieure à C /40, soit avec les valeurs d'exemple ci-dessus de l'ordre de 0,5mm.

En aval, c'est-à-dire en sortie (flèche 69) via une canalisation 70 débouchant suivant la direction Y (à l'opposé en hauteur et en orientation par rapport au conduit d'arrivée 49) hors de la chambre inférieure 9, il est possible d'équiper l'installation 1 d'un (ou plusieurs) autre(s) fût 4 dégrilleur conforme à l'invention.

Si le fût 4 est équipé comme sur la figure 12 de générateur(s) 41 de nettoyage, des manchons similaires aux manchons 12, 22 sont interposés entre la canalisation 70 et les équipements externes.

Dans des réalisations, l'entrée 10 via le conduit d'admission 11 d'une colonne 4 d'ultrafiltration est relié (directement ou par l'intermédiaire d'équipements par exemple agitateurs, chauffants, de pompage ou analogues à la canalisation de sortie 70.

Notons que selon l'invention, les structures de filtration et de nettoyage de l'installation 1 sont agencées de sorte que des éléments de séparation (tubes 27, tamis, etc.) aptes à empêcher le reflux vers les conduits d'admission 11 ou canalisation de sortie 70 de polluants.

En effet, que ce soit en mode filtration ou en mode nettoyage avec rétro lavage, ces éléments de séparation sont toujours interposés entre la chambre inférieure 9 et la chambre supérieure 8.

Bien que ceci ne soit pas toujours illustré dans les exemples, l'installation 1 qui est disposée sur un châssis 2 qui comporte dans des modes de réalisation plusieurs : sources d'alimentation en énergie électrique telles que panneaux photo voltaïques et/ou système éolien, postes de commande et contrôle, fûts de pré filtration ou dégrillage à : admission cyclonique en tambour perforé par crevaison inverse et trémies tête bêche à guidage gravitatif des polluants massifs, par exemple avec des futs de gabarit similaire voir identique à celui de la colonne 4, et éventuellement pourvu d'un système de nettoyage 40 par rétro lavage et/ ou ultrasons tels qu'évoqué pour la colonne 4 de filtration.

Au sujet de la consommation en énergie de l'invention, on a constaté sur les prototypes que du fait de l'admission frontale (sans réel gavage mais avec un rendement e l'ordre de plus de 90%, sous une pression minimum de 400 millibars soit 40.000 Pa), de l'emploi de la gravité dans le fût 4, du moteur 61 unique, etc. l'invention parvient à n'employer que 3 à 4 KW pour chaque fonction.

**Revendications**

1. Procédé d'assemblage étanche d'au moins deux tronçons (28) tubulaires venus de frittage ; chaque tronçon (28) possédant au moins une surface (30) d'assemblage sensiblement complémentaire à une surface (30) de l'autre tronçon (28) ; au moins un organe (31) de jonction comportant une âme (32) agencée de manière à être interposée sous contrainte entre les surfaces d'assemblage des tronçons, **caractérisé en ce que** l'âme (32) présente une épaisseur et une hauteur entre ces surfaces d'assemblage qui est inférieure à celle de ces surfaces (30) ; l'organe de jonction (31) présentant, de part et d'autre de l'âme transversalement, une jupe (33) avec une section d'ancrage (35) et une section d'engagement (36) ; selon le procédé, d'abord les jupes (33) sont insérées dans les alésages des tronçons (28) correspondants, avec au moins un glissement juste au droit de la section d'engagement (36), tandis qu'au droit de la section d'ancrage (35) l'insertion implique un serrage d'étanchéité ; puis est effectué une fusion d'étendue limitée, apte à ce que soient fondues localement l'âme (32) ainsi que la proximité directe à cette âme des surfaces d'assemblage (30), ce qui réalise un soudage des tronçons (28) sans altération de la structure de leur matériau constitutif au delà de la jupe.

2. Procédé selon la revendication 1 , **caractérisé en ce que** les épaisseurs et dimensions transversales de l'âme (32) déterminent une quantité de métal comprise entre 50% et 70% du métal d'apport nécessaire à l'assemblage des tronçons (28) pour le mode de fusion limitée choisi, par exemple laser ou induction ; l'âme (32) étant une pièce d'un métal ou alliage compatible avec celui des tronçons (28) ainsi qu'avec le mode de fusion limitée choisi, par exemple l'organe (31) est une pièce d'emboutissage et la fusion par laser ou induction.

3. Procédé selon la revendication 1 ou 2, **caractérisé en ce que** les tronçons (28) sont en acier inoxydable, par exemple de type 316L, l'insertion de la section d'ancrage (35) est opérée par pressage et / ou la fusion limitée de soudage est effectuée par soudage laser à tête rotative ou par un anneau d'induction ; par exemple l'assemblage d'un tube (27) comporte une étape d'empilement à l'intérieur d'un guide de maintien en position relative, de successivement un tronçon (28) puis un organe de jonction (31), et ce jusqu'à un empilement voulu, un piston opérant l'engagement dans l'alésage d'au moins un tronçon fritté de la jupe (33) de l'organe d'assemblage correspondant.

4. Procédé selon la revendication 3, **caractérisé en ce que** l'organe de jonction (31) entre deux tronçons est déterminé pour comporter une âme (32) qui présente :

   - une épaisseur transversalement aux surfaces d'assemblage (30) de l'ordre d'au plus la moitié, par exemple d'au plus le dixième de celles des tronçons (28) de destination ; et/ou
   - une hauteur de l'âme entre les surfaces d'assemblage de destination qui est inférieure, par exemple d'un vingt-cinquième, à celle de ces surfaces (30) ; et/ou
   - sur la jupe (33), la section d'engagement (36) avec biseau (37) présente une épaisseur à son extrémité distale à l'âme, qui est de l'ordre de la moitié de celle de l'âme (32).

5. Tube (27) de filtration obtenu par le procédé conforme à la revendication 4, **caractérisé en ce que** ce tube (27) comporte une pluralité de tronçons (28) en matière frittée à porosité contrôlée, par exemple de l'ordre de 0,01 à 300 $\mu$m, l'une des extrémités longitudinales du tube (27) étant formée par un tronçon (28) borgne assemblé à des tronçons (28) à orifices débouchants ; par exemple, le tube (27) possède bout-à-bout une vingtaine de tronçons (28) à orifice débouchant et chaque tronçon présente sensiblement une dimension longitudinale de l'ordre de 50mm avec des diamètre externe de l'ordre de 25mm et une épaisseur de paroi de l'ordre de 2 à 3 mm.

6. Tube (27) selon la revendication 5, **caractérisé en ce que** les intervalle de tolérance entre l'intérieur des tronçons (28) venus de frittage et la jupe (33) sont sensiblement correspondant aux valeurs normalisées suivant h7P6 au droit des sections d'ancrage (35) et h7G6 au droit des sections d'engagement (36), tandis qu'à la périphérie de l'âme (32) est ménagée une gorge périphérique ou creux (38) venu de la fusion d'étendue limitée.

7. Installation (1) de filtration pourvue d'au moins une colonne (4) avec au moins un tube (27) selon la revendication 6, **caractérisé en ce que** la colonne (4) de filtration comporte un carter (5) avec à chacune de ses extrémités longitudinales un couvercle (6) démontable ; le carter (5) définissant deux chambres (8 ; 9) à l'intérieur de la colonne (4) l'une supérieure comportant le tube (27) à tronçons (28) frittés, par exemple de 50 à 60 tubes (27) équidistants transversalement ; une admission (11, 15) principale débouchant dans la chambre (8) supérieure, tandis que depuis l'autre chambre (9) inférieure de la colonne (4) s'étend longitudinalement un conduit (20, 70) de collecte de filtrat.

8. Installation (1) selon la revendication 7, **caractérisée en ce qu'**elle est une installation (1) de filtration frontale.

9. -Installation (1) selon la revendication 7, **caractérisée en ce qu'**elle possède un châssis (2), auquel un couvercle (6) supérieur de la colonne (4) est accroché par une articulation pivotante (39) par exemple à amortissement, tandis que les admissions principale et conduit de collecte sont reliés à un circuit externe à la colonne (4) de mise en mouvement du fluide à filtrer, par l'intermédiaire de manchons (12, 22) souples ; un équipement (40) de nettoyage par ultrasons étant disposé contre l'extérieur de la paroi du carter (5) ; cet équipement (40) comportant par exemple au moins deux, par exemple trois générateurs (41) d'ultrasons raccordés à une source (3) d'alimentation en énergie.

10. Installation (1) selon la revendication 9, **caractérisée en ce que** le couvercle (6) supérieur est raccordé au châssis (2) par l'intermédiaire d'un crochet (42) pourvu d'un dynamomètre (43) lui-même relié à un poste (14) de commande et contrôle de l'installation (1), de façon qu'est détecté l'état de remplissage de la colonne (4) afin que le poste de commande autorise ou inhibe en fonction de cet état des opérations de fonctionnement de l'installation (1) telles qu'un nettoyage ; par exemple lorsque le dynamomètre détecte que la colonne (4) est remplie à plus de deux tiers de sa capacité, le nettoyage est déclenché.

11. -Installation (1) selon l'une des revendications 7 à 10, **caractérisée en ce qu'**elle comporte et est disposée sur un châssis (2) qui comporte au moins l'une des structures suivantes : une source (3) d'alimentation en énergie électrique telle que panneaux photo voltaïques, un poste (14) de commande et contrôle, au moins un fût (4) de pré filtration ou dégrillage à : admission cyclonique en tambour perforé par crevaison inverse et trémies tête bêche à guidage gravitatif des polluants massifs, par exemple un fut de gabarit similaire voire identique à celui de la colonne (4), et éventuellement pourvu d'un équipement (40) de nettoyage par rétro lavage et/ ou ultrasons.

12. -Installation (1) selon l'une des revendications 7 à 11, **caractérisée en ce qu'**un équipement (40) de nettoyage de l'installation (1) est agencé pour que des éléments aptes à empêcher le retour de polluants tels que les tubes (27) à tronçons (28) poreux et/ou des trémies tête bêche à guidage gravitatif, soient toujours interposés, quels que soient les sens de circulation des fluides dans les colonnes (4) filtration et/ou fûts de dégrillage.

13. -Installation (1) selon l'une des revendications 7 à 12, **caractérisée en ce qu'**elle comporte et est disposée sur un châssis (2) qui peut prendre les formes de :

   - un bâtiment à l'intérieur duquel l'installation (1) est agencée, ou un aménagement extérieur -tel qu'une dalle en béton armé- sur lequel l'installation (1) est fixée - éventuellement de manière amovible- ;
   - un véhicule terrestre, nautique ou aérien auquel l'installation (1) est solidarisée soit à demeure (par exemple dans le cas d'un camion itinérant d'épuration d'eau pour des missions humanitaires ou militaires) soit de manière amovible (par exemple dans le cas d'un navire de transport d'installations (1) notamment en cas d'urgence suite à un cataclysme naturel) ;
   - un châssis (2) mécano-soudé pour un hélitransport de l'installation (1), par exemple dans le cadre d'une opération militaire.

**Patentansprüche**

1. Verfahren zum dichten Verbinden mindestens zweier Rohrabschnitte (28) aus Sintermaterial, wobei jeder Abschnitt (28) mindestens eine Verbindungsfläche (30) aufweist, die im Wesentlichen komplementär zu einer Fläche (30) des anderen Abschnitts (28) ist, wobei mindestens ein Verbindungselement (31) einen Kranz (32) aufweist, der unter Spannung zwischen den Verbindungsflächen der Abschnitte angeordnet ist, **dadurch gekennzeichnet, dass** der Kranz (32) eine Dicke und eine Höhe zwischen den Verbindungsflächen aufweist, die kleiner sind als die der Flächen (30), wobei das Verbindungselement (31) zu beiden Seiten des Kranzes in Querrichtung eine Schürze (33) mit einem Verankerungsabschnitt (35) und einem Eingriffsabschnitt (36) aufweist, wobei nach dem Verfahren zuerst die Schürzen (33) in die Ausbohrungen der entsprechenden Abschnitte (28) mit mindestens einem Gleiten bis zu dem Eingriffsabschnitt (36) eingefügt werden, während in dem Verankerungsabschnitt (35) eine Dichtungsverpressung erfordert, dass ein begrenztes Verschmelzen durchgeführt wird, das geeignet ist, lokal den Kranz (32) sowie die Verbindungsflächen (30) in der unmittelbaren Umgebung des Kranzes zu verschmelzen, wodurch eine Verschweißung der Abschnitte (28) ohne Veränderung der Struktur ihrer Materialien außerhalb der Schürze erfolgt.

2. Verfahren nach Anspruch 1, **dadurch gekennzeichnet, dass** die Dicken- und Querabmessungen des Kranzes (32) eine Menge an Metall bestimmen, die zwischen 50 und 70% der Menge des Zusatzwerkstoffs beträgt, die für die Verbindung der Abschnitte (28) für den gewählten Modus eines begrenzten Verschmelzens, zum Beispiel mittels Laser oder Induktion, erforderlich ist, wobei der Kranz (32) ein Teil aus einem Metall oder einer Legierung ist, das bzw. die kompatibel mit dem Metall oder der Legierung der Abschnitte (28) ist, sowie mit dem gewählten begrenzten Verschmelzungsmodus, wobei zum Beispiel das Element (31) ein Tiefziehteil ist und das Schmelzen durch einen Laser oder durch Induktion erfolgt.

3. Verfahren nach Anspruch 1 oder 2, **dadurch gekennzeichnet, dass** die Abschnitte (28) aus Edelstahl sind, zum Beispiel vom Typ 316L, das Einfügen des Verankerungsabschnitts (35) durch Verpressung erfolgt und/oder das begrenzte Schmelzschweißen durch Laserschweißen mit einem drehbaren Kopf oder durch einen Induktionsring erfolgt, wobei zum Beispiel das Verbinden eines Rohres (27) einen Schritt des Stapelns im Inneren einer Führung, des Haltens einer Relativposition, aufeinanderfolgend eines Abschnitts (28) und dann eines Verbindungselements (31) aufweist, und dies bis zu einer gewünschten Stapelung, wobei ein Kolben das Eingreifen mindestens eines Abschnitts aus Sintermaterial der Schürze (33) des entsprechenden Verbindungselements in die Bohrung bewirkt.

4. Verfahren nach Anspruch 3, **dadurch gekennzeichnet, dass** das Verbindungselement (31) zwischen zwei Abschnitten ausgebildet ist, um einen Kranz (32) aufzuweisen, der:

   - eine Dicke quer zu den Verbindungsflächen (30) in der Größenordnung von höchstens der Hälfte, zum Beispiel höchstens einem Zehntel der Wandstärken der Zielabschnitte (28), aufweist, und/oder
   - eine Höhe des Kranzes zwischen den Zielverbindungsflächen, die kleiner ist, z.B. um ein Fünfundzwanzigstel, als die Höhe dieser Flächen (30), aufweist, und/oder

- wobei auf der Schürze (33) der Eingriffsabschnitt (36) mit einer Abschrägung (37) eine Dicke an seinem bezüglich des Kranzes distalen Ende aufweist, die in der Größenordnung von der Hälfte der Dicke des Kranzes (32) liegt.

5. Filterrohr (27), erhalten durch das Verfahren nach Anspruch 4,
**dadurch gekennzeichnet, dass** das Rohr (27) eine Mehrzahl von Abschnitten (28) aus Sintermaterial mit kontrollierter Porosität aufweist, zum Beispiel in der Größenordnung von 0,01 bis 300 μm, wobei eines der Längsenden des Rohres (27) aus einem Blindrohrabschnitt (28) gebildet wird, der mit Abschnitten (28) mit Durchgangsbohrungen verbunden ist, wobei zum Beispiel das Rohr (27) Stoß an Stoß etwa zwanzig Abschnitte (28) mit Durchgangsbohrungen aufweist, und jeder Abschnitt im Wesentlichen eine Länge der Größenordnung von 50 mm aufweist mit Außendurchmessern der Größenordnung von 25 mm und einer Wandstärke der Größenordnung von 2 bis 3 mm.

6. Rohr (27) nach Anspruch 5,
**dadurch gekennzeichnet, dass** die Toleranzbereiche zwischen dem Inneren der Abschnitte (28) aus Sintermaterial und der Schürze (33) im Wesentlichen den genormten Werten gemäß der Norm h7P6 am Ort der Verankerungsabschnitte (35) entsprechen und an den Eingriffsabschnitten (36) der Norm h7G6 entsprechen, während am Umfang des Kranzes (32) eine Umfangsnut oder eine Hohlkehle (38) ausgebildet ist, die von der Verschmelzung mit begrenztem Umfang herrührt.

7. Filtereinrichtung (1) mit mindestens einer Kolonne (4) mit mindestens einem Rohr (27) nach Anspruch 6,
**dadurch gekennzeichnet, dass** die Filterkolonne (4) ein Gehäuse (5) mit einem abnehmbaren Deckel (6) an jedem seiner Längsenden aufweist, wobei das Gehäuse (5) zwei Kammern (8, 9) im Inneren der Kolonne (4) definiert, wobei eine obere das Rohr (27) mit Abschnitten (28) aus Sintermaterial aufweist, zum Beispiel 50 bis 60 in Querrichtung gleich beabstandete Rohre (27), wobei ein Haupteinlass (11, 15) in der oberen Kammer (8) mündet, während sich ausgehend von der anderen unteren Kammer (9) der Kolonne (4) in Längsrichtung eine Leitung (20, 70) zum Sammeln des Filtrats erstreckt.

8. Einrichtung (1) nach Anspruch 7,
**dadurch gekennzeichnet, dass** sie eine Einrichtung (1) zur frontalen Filtration ist.

9. Einrichtung (1) nach Anspruch 7,
**dadurch gekennzeichnet, dass** sie ein Gestell (2) aufweist, an dem ein oberer Deckel (6) der Kolonne (4) mit einem Schwenkgelenk (39), zum Beispiel mit einer Dämpfung, befestigt ist, während die Hauptzugänge und die Sammelleitung mit einem Kreis außerhalb der Kolonne (4) zum Bewegen des zu filternden Fluids über verformbare Muffen (12, 22) verbunden sind, wobei eine Ultraschall-Reinigungseinrichtung (40) an der Außenwand des Gehäuses (5) angeordnet ist, wobei diese Einrichtung (40) zum Beispiel mindestens zwei, zum Beispiel drei, Ultraschallerzeuger (41) aufweist, die an eine Energiequelle (3) angeschlossen sind.

10. Einrichtung (1) nach Anspruch 9,
**dadurch gekennzeichnet, dass** der obere Deckel (6) an dem Gestell (2) mit einem Haken (42) verbunden ist, der mit einem Dynamometer (43) versehen ist, das selbst mit einer Steuer- und Überwachungseinheit (14) der Einrichtung (1) verbunden ist, derart, dass der Füllzustand der Kolonne (4) erfasst wird, damit die Steuereinheit in Abhängigkeit von diesem Zustand Betriebsvorgänge der Einrichtung (1), wie eine Reinigung, erlaubt oder verhindert; zum Beispiel wird, wenn das Dynamometer erfasst, dass die Kolonne (4) zu mehr als zwei Dritteln ihrer Kapazität gefüllt ist, der Reinigungsvorgang ausgelöst.

11. Einrichtung (1) nach einem der Ansprüche 7 bis 10,
**dadurch gekennzeichnet, dass** sie ein Gestell (2) aufweist und auf diesem angeordnet ist, das mindestens eine der folgenden Strukturen aufweist: eine Quelle (3) elektrischer Energie, wie beispielsweise Photovoltaikmodule, eine Steuer- und Überwachungseinheit (14), mindestens ein Fass (4) zur Vorfilterung oder Rechenreinigung mit: zyklonischem Zugang in eine durch gegenläufige Durchstechung perforierte Trommel und entgegengesetzt angeordneten Trichtern mit schwerkraftsmäßiger Führung klobiger Verunreinigungen, zum Beispiel ein Fass mit ähnlichen oder identischen Abmessungen wie die der Kolonne (4) und ggf. mit einer Ausrüstung (40) zur Reinigung durch Rückspülung und/oder Ultraschall.

12. Einrichtung (1) nach einem der Ansprüche 7 bis 11,
**dadurch gekennzeichnet, dass** eine Ausrüstung (40) zur Reinigung der Einrichtung (1) nur für Elemente eingerichtet ist, die eine Rückkehr von Verunreinigungen verhindern können, wie die Rohre (27) mit porösen Abschnitten (28) und/oder gegenläufige Trichter zur schwerkraftmäßigen Führung, die immer zwischengeschaltet sind unabhängig von der Fließrichtung von Fluiden in den Filterkolonnen (4) und/oder den Rechenreinigungsfässern.

13. Einrichtung (1) nach einem der Ansprüche 7 bis 12,

**dadurch gekennzeichnet, dass** sie ein Gestell (2) aufweist und auf diesem angeordnet ist, das Formen annehmen kann von:

- einem Gebäude, in dessen Innerem die Einrichtung (1) angeordnet ist, oder eine äußere Anordnung - wie eine Platte aus armiertem Beton - auf der die Einrichtung (1) - ggf. abmontierbar - befestigt ist,
- einem Landfahrzeug, einem Schiff oder einem Flugzeug, an denen die Einrichtung (1) befestigt ist, entweder dauerhaft (z.B. in dem Fall eines Transportlastwagens zur Wasseraufbereitung für humanitäre oder militärische Missionen), oder abnehmbar (z.B. in dem Fall eines Schiffes zum Transport von Einrichtungen (1), insbesondere bei einem Notfall infolge einer Naturkatastrophe),
- einem Schweißgestell (2) für den Transport der Einrichtung (1) mit einem Hubschrauber, zum Beispiel im Fall eines Militäreinsatzes.

**Claims**

1. Method for sealed assembly of at least two sintered tubular sections (28); each section (28) having at least one assembly surface (30) substantially complementary to a surface (30) of the other section (28); at least one junction member (31) comprising a web (32) arranged so as to be interposed under stress between the assembly surfaces of the sections, **characterized in that** the web (32) has a thickness and a height between said assembly surfaces which is less than that of said surfaces (30); the junction member (31) having, on both sides of the web transversely, a skirt (33) with an anchoring section (35) and an engagement section (36); according to the method, firstly the skirts (33) are inserted into the bores of the corresponding sections (28), with at least a sliding exactly at the level of the engagement section (36), while at the level of the anchoring section (35) the insertion involves a sealed clamping; then there is carried out a fusion of limited extent, suitable so that there are fused locally the web (32) and the immediate vicinity of said web of the assembly surfaces (30), which realises a welding of the sections (28) without alteration of the structure of their constituent material beyond the skirt.

2. Method according to claim 1, **characterized in that** the transverse thicknesses and dimensions of the web (32) determine an amount of metal comprised between 50% and 70% of the filler metal necessary for the assembly of the sections (28) for the limited fusion mode chosen, for example laser or induction; the web (32) being a piece of a metal or alloy compatible with that of the sections (28) and with the limited fusion mode chosen, for example the member (31) is a stamping and the fusion by laser or induction.

3. Method according to claim 1 or 2, **characterized in that** the sections (28) are made of stainless steel, for example of type 316L, the insertion of the anchoring section (35) is effected by pressing and/or the limited fusion welding is performed by laser welding with rotating head or by an induction ring; for example the assembly of a tube (27) comprises a step of stacking within a holding guide in relative position, successively a section (28) then a junction member (31), and until there is a desired stacking, a piston effecting the engagement in the bore of at least one sintered section of the skirt (33) of the corresponding assembly member.

4. Method according to claim 3, **characterized in that** the junction member (31) between two sections is determined to comprise a web (32) which has:

- a thickness transversely to the assembly surfaces (30) of the order of at most half, for example at most a tenth of those of said destination sections (28); and/or
- a height of the web between the destination assembly surfaces which is less than, for example a twenty-fifth, of that of said surfaces (30); and/or
- on the skirt (33), the engagement section (36) with bevel (37) has a thickness at its end distal to the web, which is of the order of half that of the web (32).

5. Filtration tube (27) obtained by the method according to claim 4, **characterized in that** said tube (27) comprises a plurality of sections (28) of sintered material with controlled porosity, for example of the order of 0.01 to 300 $\mu$m, one of the longitudinal ends of the tube (27) being formed by a blind section (28) assembled to sections (28) with orifices opening out; for example, the tube (27) has end-to-end about twenty sections (28) with orifices opening out and each section has substantially a longitudinal dimension of the order of 50 mm with outside diameters of the order of 25 mm and a wall thickness of the order of 2 to 3 mm.

6. Tube (27) according to claim 5, **characterized in that** the tolerance ranges between the interior of the sintered sections (28) and the skirt (33) substantially correspond to the standardized values according to h7P6 at the level of the anchoring sections (35) and H7G6 at the level of the engagement sections (36), while at the periphery of the web (32) is formed a peripheral groove or recess (38) from the fusion of limited extend.

7.  Filtration installation (1) provided with at least one column (4) with at least one tube (27) according to claim 6,
    **characterized in that** the filtration column (4) comprises a housing (5) with at each of its longitudinal ends a removable cover (6); the housing (5) defining two chambers (8; 9) inside the column (4) one upper comprising the tube (27) with sintered sections (28), for example of 50 to 60 transversely equidistant tubes (27); a main inlet (11, 15) opening into the upper chamber (8), while from the other, lower chamber (9) of the column (4) extends longitudinally a conduit (20, 70) for collecting filtrate.

8.  Installation (1) according to claim 7,
    **characterized in that** it is a frontal filtration installation (1).

9.  Installation (1) according to claim 7,
    **characterized in that** it has a frame (2), to which an upper cover (6) of the column (4) is attached by a pivoting articulation (39) for example with damping, while the main inlets and collecting conduit are connected to a circuit outside the column (4) for setting in motion of the fluid to be filtered, by means of flexible sleeves (12, 22); ultrasound cleaning equipment (40) being arranged against the outside of the wall of the housing (5); said equipment (40) comprising for example at least two, for example three, ultrasound generators (41) connected to an energy supply source (3).

10. Installation (1) according to claim 9,
    **characterized in that** the upper cover (6) is connected to the frame (2) via a hook (42) provided with a dynamometer (43) itself connected to a station (14) for control and monitoring of the installation (1), so that the filling state of the column (4) is detected in order that the control station allows or inhibits depending on this state working operations of the installation (1) such as cleaning; for example when the dynamometer detects that the column (4) is filled to more than two thirds of its capacity, the cleaning is initiated.

11. Installation (1) according to one of claims 7 to 10,
    **characterized in that** it comprises and is disposed on a frame (2) which comprises at least one of the following structures: an electrical energy supply source (3) such as photovoltaic panels, a station (14) for control and monitoring, at least one pre-filtration or screening barrel with: cyclonic inlet into drum perforated by reverse puncture and hoppers head to foot with gravitational guidance of solid pollutants, for example a barrel of similar or identical size to that of the column (4), and optionally provided with equipment (40) for cleaning by backwashing and/or ultrasound.

12. Installation (1) according to one of claims 7 to 11,
    **characterized in that** equipment (40) for cleaning of the installation (1) is arranged so that elements suitable for preventing the return of pollutants such as the tubes (27) with porous sections (28) and/or hoppers head to foot with gravitational guidance, are always interposed, whatever the direction of flow of the fluids flow in the filtration columns (4) and/or screening barrels.

13. Installation (1) according to one of claims 7 to 12,
    **characterized in that** it comprises and is disposed on a frame (2) which can take the forms of:

    - a building within which the installation (1) is arranged, or an external arrangement -such as a reinforced concrete slabon which the installation (1) is fixed - optionally removably-;
    - a land, water or aerial vehicle to which the installation (1) is secured either permanently (for example in the case of a roving water purification lorry for humanitarian or military missions) or removably (for example in the case of a watercraft for transporting installations (1) in particular in an emergency due to a natural disaster);
    - a mechanically welded frame (2) for helitransport of the installation (1), for example in the context of a military operation.

Fig.1

# Fig.2

# Fig.3

# Fig.4

# Fig.6

# Fig.5

Fig.7

27

28    28

29

31    38

Y

X

28    33    28

27

Fig.8

Y

X

35    38

31

Z

41    41

7

4    40

8

5

3

Fig.9

41

39

Y    43

42

X    6

Fig.10

**Fig.11**

**Fig.12**

EP 2 209 584 B1

## RÉFÉRENCES CITÉES DANS LA DESCRIPTION

**Documents brevets cités dans la description**

- FR 2558736
- FR 2860730
- US 6177014 B
- WO 9964356 A
- DE 3615947
- US 2001044999 A
- US 5368223 A
- DE 102005005670
- DE 10359813
- DE 8910844